# EUROPÄISCHE PATENTSCHRIFT

(11) **EP 2 177 801 B1**
(45) Veröffentlichungstag und Bekanntmachung des Hinweises auf die Patenterteilung: **14.12.2011**
(21) Anmeldenummer: 09012173.2
(22) Anmeldetag: 25.09.2009
(51) Int. Cl.: F16K 31/04, F02M 25/07

(54) **Stellantrieb, insbesondere zur Betätigung eines Abgasrückführventils**
Actuating device, in particular for actuating a waste gas return valve
Mécanisme de commande, notamment d'actionnement d'une soupape à clapet anti-retour

(30) Priorität: 15.10.2008 DE 102008053570
(43) Veröffentlichungstag der Anmeldung: 21.04.2010
(73) Patentinhaber: Bühler Motor GmbH, 90459 Nürnberg (DE)
(72) Erfinder: Frühwald, Bernd, 91459 Markt Erlbach (DE); Guttenberger, Richard, Obermässing 91171 Greding (DE)

(56) Entgegenhaltungen:
- DE-A1- 10 134 428
- DE-A1- 19 736 521
- GB-A- 627 005
- JP-A- 9 327 149
- US-A- 4 595 081

## Beschreibung

Die Erfindung betrifft einen Stellantrieb (1), insbesondere zur Betätigung eines Abgasrückführventils, mit einem Elektromotor (2), einem Untersetzungsgetriebe (3), einer Fail-Safe-Einrichtung (4) und einem Ausgangsgetriebeelement (7), wobei der Elektromotor (2), das Untersetzungsgetriebe (3), die Fail-Safe-Einrichtung (4) und das Ausgangsgetriebeelement (7) nacheinander auf einer gemeinsamen Symmetrieachse angeordnet sind und das Untersetzungsgetriebe und die Fail-Safe-Einrichtung (4) in einem gemeinsamen Getriebegehäuse (6) aufgenommen sind. Das Untersetzungsgetriebe ist ein Planetengetriebe (3), das ein Sonnenrad (13), mehrere Planetenräder (22), die auf einem Planetenträger (14) gelagert sind und ein Hohlrad (10) umfasst.

Ein gattungsgemäßer Stellantrieb ist aus der GB 627,005 bekannt, dieser besteht aus einem Elektromotor, einem Untersetzungsgetriebe und als Ausgangsgetriebe ein Kugelspindeltrieb, der eine Selbsthemmung verhindert, so dass eine Betätigung auch im stromlosen Zustand möglich ist. Dabei ist eine Elektromagnelkupplung vorgesehen, welche den Getriebeausgang nur bei Motorbetrieb ankuppelt. Der bekannte Antrieb ist durch aufwändige und eine Vielzahl an Teilen umfassende Konstruktion gekennzeichnet.

Aus der JP 09-327149 ist ein linearer Stellantrieb mit Untersetzungsgetriebe und einer Fail-Safe-Einrichtung bekannt bei dem die wesentlichen Bauteile auf einer gemeinsamen Symmetrieachse angeordnet sind.

Die DE 10 2006 035 397 A1 beschreibt einen Antrieb, bestehend aus einem Elektromotor, einem Stirnradgetriebe und als Ausgangsgetriebe ein Zahnstangengetriebe, wobei am Ende der Zahnstange ein Hubventil angeordnet ist. Dieser Antrieb ist durch seine geometrische Gestaltung kaum an unterschiedliche Anforderungen anpassbar, z.B. durch Austausch einiger weniger Bauteile. Ein weiterer Nachteil besteht darin, dass die Montage in unterschiedlichen Fügerichtungen durchgeführt werden muss.

Aufgabe der Erfindung ist es bei einem gattungsgemäßen Stellantrieb für einen kompakten, robusten und symmetrischen baukastenartigen vibrationsstabllen Aufbau zu sorgen, wobei dieser einfach zu montieren ist, eine geringe Teileanzahl aufweist und die genaue koaxiale Ausrichtung erleichtert ist.

Diese Aufgabe wird erfindungsgemäß durch die Ansprüche 1-18 gelöst.

Die erste Lösung gelingt dadurch, dass der Elektromotor (2) ein Kommutatormotor ist, der eine Bürstenbrücke (9) umfasst, die ein Wälzlager (8) aufnimmt und als Lagerschild für den Elektromotor (2) dient, das Wälzlager (8) axial aus der Bürstenbrücke (9) vorspringt und der vorspringende Außenring des Wälzlagers (8) als Aufnahme für das Hohlrad (10) des Planetengetriebes (3) dient. Diese Anordnung ermöglicht es die zu montierenden Bauteile in einer einzigen Fügerichtung zu montieren und dadurch die Taktzeiten bei der Montage zu erhöhen. Der Aufbau ist symmetrisch, wodurch ebenfalls die Montage erleichtert ist, darüber hinaus ist ein sehr kompakter platzsparender und vibrationsstabiler Aufbau gegeben. Durch das Wälzlager, das einerseits in der Bürstenbrücke und andererseits im Hohlrad aufgenommen ist, können diese Bauteile mit hoher Genauigkeit zueinander ausgerichtet werden. Eine alternative Lösung besteht darin, dass das Hohlrad (10) auch mit der Bürstenbrüche einstückig sein kann.

Weiterbildungen der Erfindung sind in den Unteransprüchen dargestellt. Es ist vorgesehen, dass das Ausgangsgetriebeelement (7) außerhalb des Getriebegehäuses (6) angeordnet ist, um eine kompakte Baueinheit zu schaffen, die an ein kundenseitiges Stellglicd ankoppelbar ist. Grundsätzlich kann das Ausgangsgetriebeelement auch innerhalb des Getriebegehäuses angeordnet sein.

Zweckmäßigerweise kann das Ausgangsgetriebeelement (7) ein Zahnstangenritzel eines Zahnstangengetriebes (5) sein, das einfach mit einem kundenseitigen Stellglied ankoppelbar ist.

Wenn das Wälzlager (8) axial aus der Bürstenbrücke (9) vorspringt und der vorspringende Außenring des Wälzlagers (8) als Aufnahme für das Hohlrad (10) des Planetengetriebes (3) dient, ist eine genaue Ausrichtung des Hohlrads gegenüber dem Motor möglich.

Es ist vorgesehen, dass der Stellantrieb eine Motorwelle (11) und eine Getriebewelle (12) umfasst, die gegeneinander getrieblich verdrehbar sind und die Getriebewelle (12) unmittelbar in der Motorwelle oder in einem mit der Motorwelle verbundenen Sonnenrad (13) des Planetengetriebes (3) gelagert ist. Das Sonnenrad kann entweder integraler Bestandteil der Motorwelle oder vornehmlich durch Aufpressen mit der Motorwelle verbunden sein. Zur Lagerung der Getriebewelle in der Motorwelle kann ein Zylinderstift (28) in konzentrische Ausnehmungen der beiden Wellen eingefügt sein. In einer der beiden Wellen kann der Stift

auch durch eine Pressverbindung fixiert sein. Der Zylinderstift (28) kann auch in geringem Maße als Fluchtungsausgleich dienen.

Das Hohlrad (10) ist zweckmäßigerweise drehfest mit dem Getriebegehäuse (6) verbunden, wobei radiale Vorsprünge in Gehäusenuten eingreifen. . Das Hohlrad (10) kann auch mit dem Getriebegehäuse einstöckig sein.

Nach einem bevorzugten Ausführungsbeispiel der Erfindung ist vorgesehen, dass der Planetenträger (14) des Planetengetriebes (3) einen Mitnehmerstift (15) trägt, der mit der Fail-Safe-Einrichtung (4) in Eingriff ist, wobei der der Mitnehmerstift (15) ein Zylinderstift ist, der in einen mit dem Planetenträger (14) einstückigen Ausleger (21) eingepresst oder mit dem Planetenträger einstöckig ist.

Weiter ist vorgesehen, dass der Planetenträger (14) fest mit der Getriebewelle (12) verbunden ist.

Es wird vorgeschlagen, dass das erste Mitnahmemittel (17) eine erste Nabe (27) und das zweite Mitnahmemittel (18) eine zweite Nabe (50) aufweist und dass die Naben (27, 50) jeweils einen Durchgang für die Getriebewelle (12) aufweisen, auf der beide Mitnahmemittel (17, 18) drehbeweglich gelagert sind. Auf diese Weise lassen sich die Mitnahmemittel einfach fügen und an unterschiedliche Anforderungen anpassen.

Weiter ist vorgesehen, dass das erste Mitnahmemittel (17) einen erstan scheibenförmigen Bereich (25) aufweist, der an die erste Nabe (27) anschließt und das zweite Mitnahmemittel (18) einen zweiten scheibenförmigen Bereich aufweist, der sich an die zweite Nabe (50) anschließt, wobei die schelbenförmigen Bereiche (25, 51) und die Naben (27, 50) einen Aufnahmeraum für die Spiralfeder (16) begrenzen. Dadurch ist die Spiralfeder (16) zuverlässig und platzsparend aufgenommen und der gewünschte symmetrische Aufbau wird sichergestellt.

Das erste Mitnahmemittel (17) weist einen Anschlagvorsprung (24) auf, der mit einem Gehäuseanschlag (49) im Getriebegehäuse (6) zusammenwirkt. DerAnschlag erlaubt das Spannen der Spiralfeder, indem er deren inneres Ende festhält. In der anderen Drehrichtung wirkt der Anschlag nicht auf das erste Mitnahmemittel, sondern auf das zweite Mitnahmemittel, somit kann in beiden Drehrichtungen ein Spannen der Feder erfolgen. Die Ausgangsposition wird als "Null-Stellung" bezeichnet.

Der Mitnehmerstift (15) ist in einem Bewegungsraum drehbeweglich angeordnet, der radial von dem scheibenförmigen Bereich (25) des ersten Mitnahmemittels (16) und dem Getriebegehäuse (6) begrenzt ist, während der Drehwinkelbereich des Bewegungsraums von zwei Verdrehsicherungsvorsprüngen (24) des ersten Mitnahmemittels (17) begrenzt ist.

Das zweiten Mitnahmemittel (18) weist einen Mitnahmevorsprung (19), der mit dem Mitnehmerstift (15) des Planetenträgers (14) zusammenwirkt und einen Mitnahmezapfen (20), der für den Eingriff in das äußere, halbrund gebogene Ende (26) der Spiralfeder (16) dient, auf. Dabei ist der Mitnahmevorsprung (19) etwa um 180° gegenüber dem Mitnahmezapfen (20) auf dem scheibenförmigen Übertragungsmittel (18) versetzt und in dessen radial äußeren Randbereich angeordnet.

Die Spiralfeder (16) ist um die erste Nabe (27) des ersten Mitnahmemittels (17) herum angeordnet, wobei das innere Ende der Spiralfeder (16) abgewinkelt und radial zur Drehachse gerichtet ist und in eine achsparallele Nut der ersten Nabe (27) eingreift oder mit einem Vorsprung zusammenwirkt

Ein Ausführungsbeispiel der Erfindung wird nachfolgend anhand der Zeichnung näher erläutert. Es zeigen:
- Fig. 1: eine Schnittansicht durch den erfindungsgemäßen Stellantrieb,
- Fig. 2: eine Außenansicht auf den Stellantrieb,
- Fig. 3: eine räumliche Schnittdarstellung einer Fail-Safe-Einrichtung,
- Fig. 4: eine räumliche Darstellung eines Planetengetriebes (ohne Hohlrad),
- Fig. 5: eine Darstellung gemäß Fig. 4 mit einem ausgeblendete Teil, und
- Fig. 6: eine räumliche Darstellung eines ersten Mitnahmemittels mit einer Spiralfeder,
- Fig. 7: eine räumliche Darstellung eines zweiten Mitnahmemittels mit der Spiralfeder,
- Fig. 8: ein Getriebegehäuse mit einem Anschlag und
- Fig. 9.: die Fail-Safe-Einrichtung bei ausgeblendetem Gehäuse.

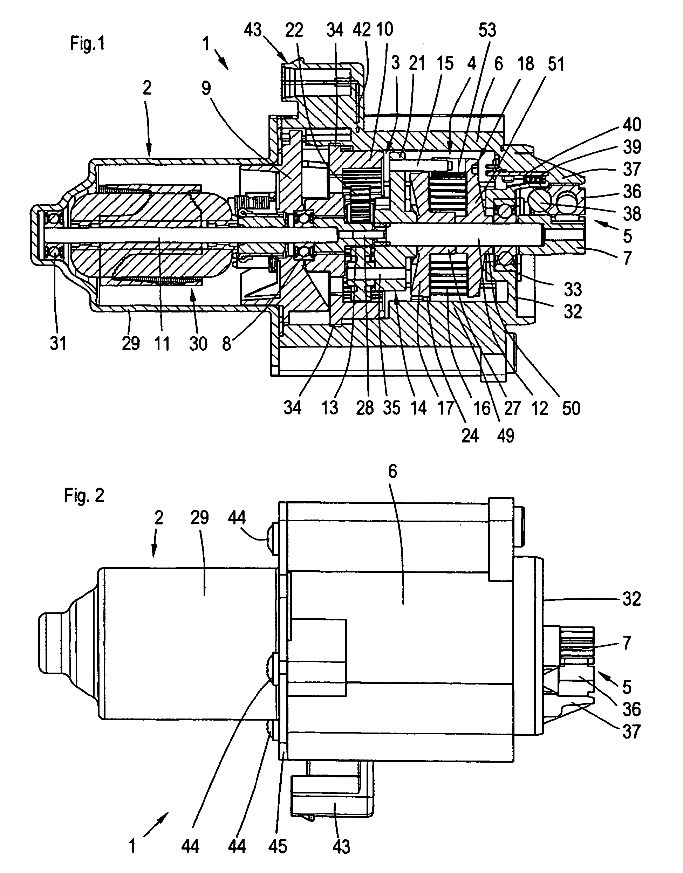

Fig. 1 zeigt eine Schnittansicht durch den erfindungsgemäßen Stellantrieb 1, mit einem Elektromotor 2, bestehend aus einem tiefgezogenen Gehäusetopf 29, einem Rotor 30, der eine Welle 11 umfasst, die in einem ersten Lager 31 im Gehäusetopf 29 und in einem zweiten Wälzlager 8 in einer Bürstenbrücke 9 gelagert ist, einem Getriebegehäuse 6, das ein Planetengetriebe 3 und eine Fail-Safe-Einrichtung 4 aufnimmt und mit einem Getriebe-Lagerschild 32 einstückig ist, in dem ein drittes Lager 33 aufgenommen ist, wobei dieses eine Getriebewelle 12 aufnimmt, das andererseits über einen Zylinderstift 28 in einem Ritzel 13 gelagert ist, das auf die Motorwelle 11 aufgepresst ist. Das Wälzlager 8 springt aus der Bürstenbrückenebene vor und nimmt ein Hohlrad 10 des Planetengetriebes auf, das im radial äußeren Bereich Anformungen 34 aufweist, die mit dem Gehäuse formschlüssig verbunden sind und das Hohlrad 10 gegen Verdrehen sichern. Das Ritzel 13 ist im Getriebegehäuse 6, auf der dem Elektromotor 2 abgewandten Seite der Bürstenbrücke 9 angeordnet und mit Planetenrädern 22 in Eingriff, die ihrerseits im Hohlrad 10 eingreifen und auf Lagerzapfen 35 eines Planetenträgers 14 gelagert sind. Der Planetenträger 14 weist einen Ausleger 21 auf in dem ein Mitnehmerstift 15 eingepresst ist, der mit einem ersten Mitnahmevorsprung des ersten Mitnahmemittels 17 und einem zweiten Mitnahmevorsprung 53 eines zweiten Mitnahmemittels 18 gekuppelt ist. Das zweite Mitnahmemittel 18 ist im Wesentlichen scheibenförmig ausgebildet und weist eine zweite Nabe 50 auf, die auf der Getriebewelle 12 drehbeweglich gelagert ist. Das zweite Mitnahmemittel 18 ist mit einem Ende einer Spiralfeder 16 verbunden (in Fig.1 nicht zu erkennen), die in der ersten Nabe 27 eines scheibenförmigen ersten Mitnahmemittels 17 eingreift, wobei das erste Mitnahmemittel 17 einen Anschlagvorsprung 24 aufweist, der mit einem Gehäuseanschlag 49 zusammenwirkt. Die Getriebewelle 12 ist fest mit dem Planetenträger 14 verbunden, nimmt das erste Mitnahmemittel 17 und das zweite Mitnahmemittel 18 drehbeweglich auf, ist im Getriebelager 33 gelagert und an einem Ende, außerhalb des Getriebegehäuses 6, mit einem Zahnstangenritzel 7 fest durch eine Pressverbindung verbunden. Das Zahnstangenritzel 7 ist mit einer Zahnstange 36 in Eingriff, die an einer Abstützung 37 des Getriebegehäuses 6 abgestützt ist und mit der Zahnstange 36 ein Zahnstangengetriebe bildet. Die Zahnstange 36 trägt einen Gebermagneten 38, der mit einem Hallsensor 39 zusammenwirkt, der auf einer Leiterplatte 40 angeordnet ist, die in einer Tasche 41 innerhalb der Abstützung 37 aufgenommen ist. Das Getriebegehäuse 6 besteht aus einem spritzgusstechnisch verarbeitbarem Kunststoffmaterial. Die Leiterplatte 40 ist über in das Getriebegehäuse 6 eingespritzte Leitbleche 42 mit einem Stecker 43 verbunden, der radial am Gehäuse angeordnet und achsparallel ausgerichtet ist.

Fig. 2 zeigt eine Außenansicht auf den Stellantrieb 1 mit dem Elektromotor 2, dem Motorgehäuse 29, dem Getriebegehäuse 6, dem Getriebelagerschild 32, der Abstützung 37, dem Zahnstangenritzel 7 und der Zahnstange 36. Das Motorgehäuse 29 weist einen Flansch 45 auf, der über Schrauben 44 mit dem Getriebegehäuse 6 verschraubt ist.

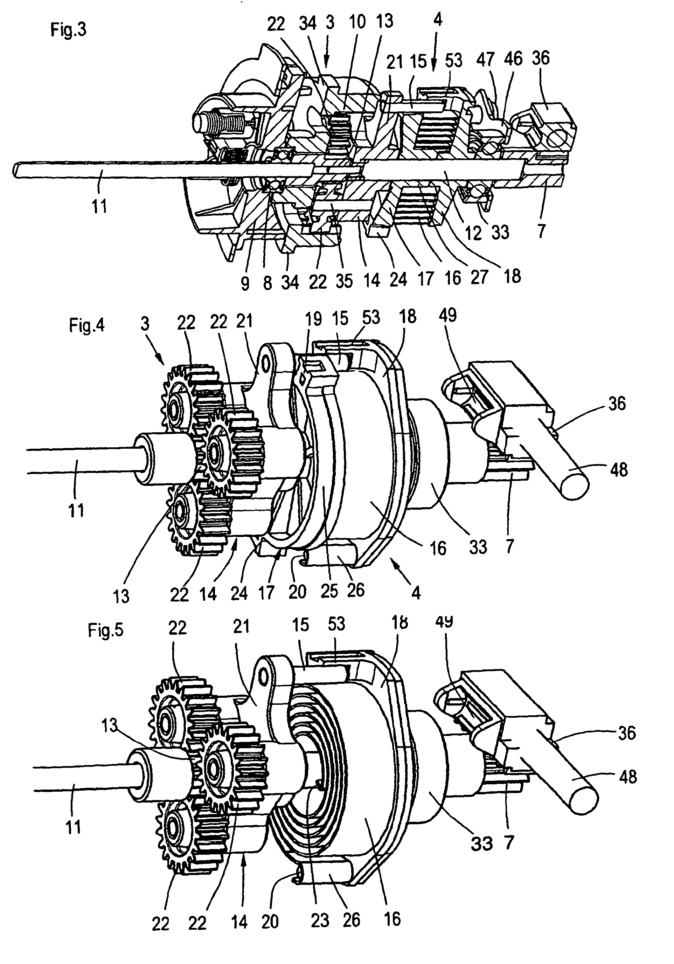

Fig. 3 zeigt eine räumliche Schnittdarstellung des Planetengetriebes 3 und der Fail-Safe-Einrichtung 4, bei dem das Getriebegehäuse ausgeblendet ist. Darin ist zu erkennen, die Motorwelle 11, das Wälzlager 8, das Sonnenrad 13, die Getriebewelle 12, das Getriebelager 33, das Zahnstangenritzel 7, die Zahnstange 36, ein Lagerhalteblech 46, das durch eine Lagerschraube 47 am Getriebegehäuse befestigt ist und dadurch den Außenring des Getriebelagers 33 hält, das Hohlrad 10 mit den Anformungen 34, die Planetenräder 22, der Planetenträger 14, mit dem Ausleger 21 und dem Mitnehmerstift 15, das erste Mitnahmemittel 17, mit dem ersten Anschlagvorsprung 24, die Spiralfeder 16, und das zweite Mitnahmemittel 18, mit dem zweiten Mitnahmevorsprung 53.

Fig. 4 zeigt eine räumliche Darstellung des Planetengetriebes 3 und der Fall-Safe-Einrichtung 4, mit der Motorwelle 11, dem Sonnenrad 13, den Planetenrädern 22, dem Planetenträger 14, mit dem Ausleger 21 und dem Mitnehmerstift 15, dem ersten Mitnahmemittel 17, das einen scheibenförmigen Bereich 25 aufweist, an dem der Anschlagvorsprung 24 angeformt ist, der den Schwenkbereich des Mitnehmerstifts 15 begrenzt, der Spiralfeder 16, die mit einem halbrund gebogenen Ende 26 versehen ist, das in einen Mitnahmezapfen 20 eingreift, der mit dem zweiten Mitnahmemittel 18 verbunden ist, mit dem zweiten Mitnahmevorsprung 53, dem Getriebelager 33, dem Zahnstangenritzel 7 und der Zahnstange 36, die mit einer Ventilstange 48 und einer Sensorgeberaufnahme 49 einstückig ist.

Fig. 5 zeigt eine Darstellung gemäß Fig. 4 mit ausgeblendetem ersten Mitnahmemittel. Zu erkennen ist hier das innere Ende der Spiralfeder 16, das als Mitnahmelappen 23 nach innen abgewinkelt ist und mit einem Nabenvorsprung des hier ausgeblendeten ersten Mitnahmemittels in Eingriff ist.

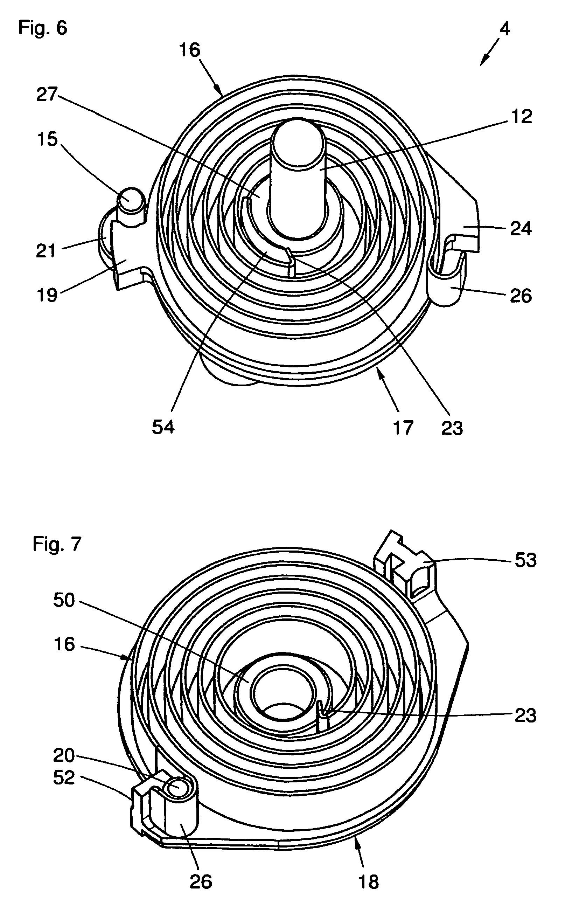

In Fig. 6 ist das erste Mitnahmemittel 17 mit der montierten Spiralfeder deutlicher herausgestellt. Das erste Mitnahmemittel 17 ist mit dem ersten Mitnahmevorsprung 19, der an dem Mitnehmerstift 15 des Auslegers 21 anliegt, dem ersten Anschlagvorsprung 24, einer ersten Nabe 27 und dem Nabenvorsprung 54 versehen. An dem Nabenvorsprung 54 ist die Spiralfeder 16 mit ihrem inneren als Mitnahmelappen 23 abgewinkelten Ende in Eingriff. Die Spiralfeder 16 weist außen ein halbrund gebogenes Ende 26 auf, das, wie in Fig. 7 zu erkennen, mit einem Mitnahmezapfen 20 des zweiten Mitnahmemittels 18 eingreift.

Fig. 7 zeigt weiter, dass das zweite Mitnahmemittel 18 mit dem zweiten Mitnahmevorsprung und dem zweiten Anschlagvorsprung 52 versehen ist und eine zweite Nabe 50 aufweist.

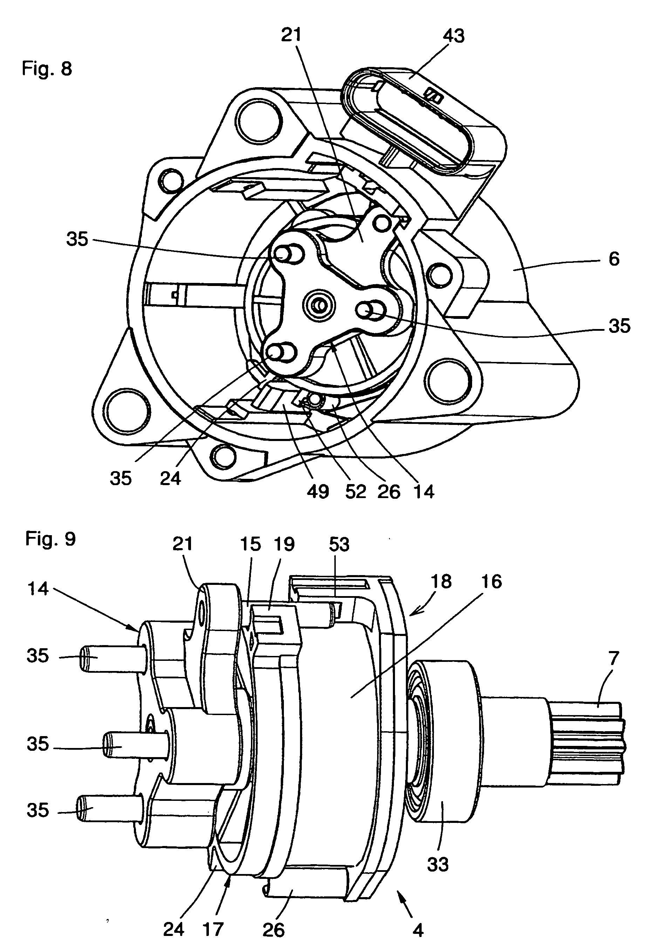

In Fig. 8 ist das Getriebegehäuse 6 mit dem Gehäuseanschlag 49 dargestellt, an dem die Anschlagvorsprünge 24 und 52 des ersten und zweiten Mitnahmemittels 17, 18 unter Vorspannung anliegen.

Fig. 9 zeigt deutlicher als die vorhergehenden Figuren die geometrische Zuordnung der Einzelteile der Fail-Safe-Einrichtung 4, mit dem Planetenträger 14, den Lagerzapfen 35 für die hier ausgeblendeten Planetenräder, dem Ausleger 21 mit dem Mitnehmerzapfen 15, der einerseits an dem ersten Mitnahmevorsprung 19 des ersten Mitnahmemittels 17 und andererseits an dem zweiten Mitnahmevorsprung 53 des zweiten Mitanhmemittels 18 unter Vorspannung anliegt. Die beiden Mitnahmemittel 17 und 18 nehmen die Spiralfeder 16 zwischen ihren scheibenförmigen Bereichen 25, 51 auf.

### Bezugszeichenliste

- 1: Stellantrieb
- 2: Elektromotor
- 3: Planetengetriebe
- 4: Fail-Safe-Einrichtung
- 5: Zahnstangengetriebe
- 6: Getriebegehäuse
- 7: Zahnstangenritzel
- 8: Wälzlager
- 9: Bürstenbrücke
- 10: Hohlrad
- 11: Motorwelle
- 12: Getriebewelle
- 13: Sonnenrad
- 14: Planetenträger
- 15: Mitnehmerstift
- 16: Spiralfeder
- 17: erstes Mitnahmemittel (Haltemittel)
- 18: zweites Mitnahmemittel (Übertr.gsm.)
- 19: erster Mitnahmevorsprung
- 20: Mitnahmezapfen
- 21: Ausleger
- 22: Planetenrad
- 23: Mitnahmelappen
- 24: erster Anschlagvorsprung
- 25: erster scheibenförmiger Bereich
- 26: halbrundes Ende der Spiralfeder
- 27: erste Nabe
- 28: Zylinderstift
- 29: Gehäusetopf
- 30: Rotor
- 31: Lager
- 32: Getriebe-Lagerschild
- 33: Getriebelager
- 34: Anformung
- 35: Lagerzapfen
- 36: Zahnstange
- 37: Abstützung
- 38: Gebermagnet
- 39: Hallsensor
- 40: Leiterplatte
- 41: Tasche
- 42: Leitblech
- 43: Stecker
- 44: Schraube
- 45: Flansch
- 46: Lagerhalteblech
- 47: Lagerschraube
- 48: Ventilstange
- 49: Gehäuseanschlag
- 50: zweite Nabe
- 51: zweiter scheibenförmiger Bereich
- 52: zweiter Anschlagvorsprung
- 53: zweiter Mitnahmevorsprung
- 54: Nabenvorsprung

## Patentansprüche

1. Stellantrieb (1), insbesondere zur Betätigung eines Abgasrückführventils, mit einem Elektromotor (2), einem Untersetzungsgetriebe (3), einer Fail-Safe-Einrichtung (4) und einem Ausgangsgetriebeelement (7), wobei der Elektromotor (2), das Untersetzungsgetriebe (3), die Fail-Safe-Elnrichtung (4) und das Ausgangsgetriebeelement (7) nacheinander auf einer gemeinsamen Symmetrieachse angeordnet sind und das Untersetzungsgetriebe und die Fail-Safe-Einrichtung (4) in einem gemeinsamen Getriebegehäuse (6) aufgenommen sind, wobei, das Untersetzungsgetriebe ein Planetengetriebe (3) ist, das ein Sonnenrad (13), mehrere Planetenräder (22), die auf einem Planetenträger (14) gelagert sind und ein Hohlrad (10) umfasst, **dadurch gekennzeichnet, dass** der Elektromotor (2) ein Kommutatormotor ist, der eine Bürstenbrücke (9) umfasst, die entweder ein Wälzlager (8) aufnimmt und als Lagerschild für den Elektromotor (2) dient, das Wälzlager (8) axial aus der Bürstenbrücke (9) vorspringt und der vorspringende Außenring des Wälzlagers (8) als Aufnahme für das Hohlrad (10) des Planetengetriebes (3) dient, oder die Bürstenbrüche (9) einstückig mit dem Hohlrad (10) ist.

2. Stellantrieb nach Anspruch 1, **dadurch gekennzeichnet, dass** das Ausgangsgetriebeelement (7) außerhalb des Getriebegehäuses (6) angeordnet ist.

3. Stellantrieb nach Anspruch 1, **dadurch gekennzeichnet, dass** das Ausgangsgetriebeelement (7) innerhalb des Getriebegehäuses (6) angeordnet ist.

4. Stellantrieb nach Anspruch 2 oder 3, **dadurch gekennzeichnet, dass** das Ausgangsgetriebeelement (7) ein Zahnstangenritzel eines Zahnstangengetriebes (5) ist.

5. Stellantrieb nach Anspruch 1, **dadurch gekennzeichnet, dass** er eine Motorwelle (11) und eine Getriebewelle (12) umfasst, die gegeneinander getrieblich verdrehbar sind und die Getriebewelle (12) unmittelbar in der Motorwelle oder in einem mit der Motorwelle verbundenen Sonnenrad (13) des Planetengetriebes (3) gelagert ist.

6. Stellantrieb nach Anspruch 1, **dadurch gekennzeichnet, dass** das Hohlrad (10) drehfest mit dem Getriebegehäuse (6) verbunden ist.

7. Stellantrieb nach Anspruch 1, **dadurch gekennzeichnet, dass** das Hohlrad (10) mit dem Getriebegehäuse (6) einstückig ist.

8. Stellantrieb nach zumindest einem der vorangehdnen Ansprüche, **dadurch gekennzeichnet, dass** der Planetenträger (14) des Planetengetriebes (3) einen Mitnehmerstift (15) trägt, der mit der Fail-Safe-Einrichtung (4) in Eingriff ist.

9. Stellantrieb nach Anspruch 8, **dadurch gekennzeichnet, dass** der Mitnehmerstift (15) ein Zylinderstift ist, der in einen mit dem Planetenträger (14) einstückigen Ausleger (21) eingepresst ist oder mit dem Planetenträger elnstückig ist.

10. Stellantrieb nach Anspruch 6, **dadurch gekennzeichnet, dass** der Planetenträger (14) fest mit der Getriebewelle (12) verbunden ist oder mit dieser einstückig ist.

11. Stellantrieb nach Anspruch 1 oder 8. **dadurch gekennzeichnet, dass** die Fall-Safe-Einrichtung (4) eine Spiralfeder (16) umfasst, die einerseits von einem ersten
Mitnahmemittel (17) und andererseits von einem zweiten Mitnahmemittel (18) mitnehmbar und somit spannbar ist.

12. Stellantrieb nach Anspruch 11, **dadurch gekennzeichnet, dass** das erste Mitnahmemittel (17) eine erste Nabe (27) und das zweite Mitnahmemittel (18) eine zweite Nabe (50) aufweist und dass die Naben (27, 50) jeweils einen Durchgang für die Getriebewelle (12) aufweisen, auf der beide Mitnahmemittel (17, 18) drehbeweglich gelagert sind.

13. Stellantrieb nach Anspruch 11 oder 12, **dadurch gekennzeichnet, dass** das erste Mitnahmemittel (17) einen ersten scheibenförmigen Bereich (25) aufweist, der an die erste Nabe (27) anschließt und das zweite Mitnahmemittel (18) einen zweiten scheibenförmigen Bereich aufweist, der sich an die zweite Nabe (50) anschließt, wobei die scheibenförmigen Bereiche (25, 51) und die Naben (27, 50) einen Aufnahmeraum für die Spiralfeder (16) begrenzen.

14. Stellantrieb nach Anspruch 11, 12 oder 13, **dadurch gekennzeichnet, dass** das erste Mitnahmemittel (17) einen Anschlagvorsprung (24) aufweist, der mit einem Gehäuseanschlag (49) im Getriebegehäuse (6) zusammenwirkt.

15. Stellantrieb nach den Ansprüchen 8 und 14, **dadurch gekennzeichnet, dass** der Mitnehmerstift (15) in einem Bewegungsraum drehbeweglich angeordnet ist, der radial von dem ersten scheibenförmigen Bereich (25) des ersten Mitnahmemittels (17) und dem Getriebegehäuse (6) begrenzt ist und der Drehwinkelbereich des Bewegungsraums von zwei Anschlagvorsprüngen (24) des ersten Mitnahmemittels (17) begrenzt ist.

16. Stellantrieb nach zumindest einem der Ansprüche 11 bis 15, **dadurch gekennzeichnet, dass** das zweite Mitnahmemittel (18) einen Mitnahmevorsprung (19), der mit dem Mitnehmerstift (15) des Planetenträgers (14) zusammenwirkt und einen Mitnahmezapfen (20), der für den Eingriff in das äußere, halbrund gebogene Ende (26) der Spiralfeder (16) dient, aufweist.

17. Stellantrieb nach Anspruch 16, **dadurch gekennzeichnet, dass** der Mitnahmevorsprung (19) etwa um 180° gegenüber dem Mitnahmezapfen (20) auf dem scheibenförmigen Übertragungsmittel (18) versetzt und in dessen radial äußeren Randbereich angeordnet ist.

18. Stellantrieb nach Anspruch 12, **dadurch gekennzeichnet, dass** die Spiralfeder (16) um die erste Nabe (27) des ersten Mitnahmemittels (17) herum angeordnet ist, wobei das erste Ende der Spiralfeder (16) abgewinkelt und radial zur Drehachse gerichtet ist und in eine achsparallele Nut der ersten Nabe (27) eingreift oder mit einem Vorsprung zusammenwirkt.

## Claims

1. An actuator (1), in particular for actuating an exhaust gas recirculation valve, having an electric motor (2), a reduction gear (3), a fail-safe device (4) and an output gear element (7), wherein the electric motor (2), the reduction gear (3), the fail-safe device (4) and the output gear element (7) are arranged one after the other on a common axis of symmetry and the reduction gear and the fail-safe device (4) are received in a common gear housing (6), wherein the reduction gear is planetary gearing (3) comprising a sun gear (13), a plurality of planet gears (22), mounted on a planet carrier (14), and a hollow wheel (10), **characterised in that** the electric motor (2) is a commutator motor comprising a brush rocker (9) which either receives an antifriction bearing (8) and serves as a bearing plate for the electric motor (2), the antifriction bearing (8) projecting axially from the brush rocker (9) and the projecting outer ring of the antifriction bearing (8) serving as a receiver for the hollow wheel (10) of the planetary gearing (3), or is integral with the hollow wheel (10).

2. An actuator according to claim 1, **characterised in that** the output gear element (7) is arranged outside of the gear housing (6).

3. An actuator according to claim 1, **characterised in that** the output gear element (7) is arranged within the gear housing (6).

4. An actuator according to claim 2 or 3, **characterised in that** the output gear element (7) is a rack pinion of a rack-and-pinion gear (5).

5. An actuator according to claim 1, **characterised in that** it comprises a motor shaft (11) and a gear shaft (12) rotatable gear-wise relative to one another and the gear shaft (12) is mounted directly in the motor shaft or in a sun gear (13), connected to the motor shaft, of the planetary gearing (3).

6. An actuator according to claim 1, **characterised in that** the hollow wheel (10) is connected to the gear housing (6) in a rotationally-fixed manner

7. An actuator according to claim 1, **characterised in that** the hollow wheel (10) is integral with the gear housing (6).

8. An actuator according to at least one of the preceding claims, **characterised in that** the planet carrier (14) of the planetary gearing (3) bears an entraining pin (15) engaged with the fail-safe device (4).

9. An actuator according to claim 8, **characterised in that** the entraining pin (15) is a cylindrical pin which is forced into an arm (21) integral with the planet carrier (14) or which is integral with the planet carrier.

10. An actuator according to claim 5, **characterised in that** the planet carrier (14) is securely connected to the gear shaft (12) or is integral therewith.

11. An actuator according to claim 1 or 8, **characterised in that** the fail-safe device (4) comprises a spiral spring (16) which is entrainable, and consequently tensionable, at one end by a first entraining means (17) and at the other end by a second entraining means (18).

12. An actuator according to claim 11, **characterised in that** the first entraining means (17) has a first hub (27) and the second entraining means (18) has a second hub (50), and **in that** the hubs (27, 50) each have a passage for the gear shaft (12) on which both entraining means (17, 18) are rotatably mounted.

13. An actuator according to claim 11 or 12, **characterised in that** the first entraining means (17) has a first disc-shaped region (25) adjoining the first hub (27) and the second entraining means (18) has a second disc-shaped region adjoining the second hub (50), wherein the disc-shaped regions (25, 51) and the hubs (27, 50) bound a receiving space for the spiral spring (16).

14. An actuator according to claim 11, 12 or 13, **characterised in that** the first entraining means (17) has a stopping projection (24) co-operating with a housing stop (49) in the gear housing (6).

15. An actuator according to claims 8 and 14, **characterised in that** the entraining pin (15) is rotatably arranged in a movement space bounded radially by the first disc-shaped region (25) of the first entraining means (17) and by the gear housing (6) and the rotational angle range of the movement space is bounded by two stopping projections (24) of the first entraining means (17).

16. An actuator according to at least one of claims 11 to 15, **characterised in that** the second entraining means (18) has an entraining projection (19) co-operating with the entraining pin (15) of the planet carrier (14) and has an entraining peg (20) serving to engage the outer end (26), bent in a semi-circle, of the spiral spring (16).

17. An actuator according to claim 16, **characterised in that** the entraining projection (19) is offset on the disc-shaped transmission means (18) through approximately 180° with respect to the entraining peg (20) and is arranged in the radially outer edge region thereof.

18. An actuator according to claim 12, **characterised in that** the spiral spring (16) is arranged around the first hub (27) of the first entraining means (17), wherein the first end of the spiral spring (16) is bent at an angle and is directed radially to the rotational axis and engages an axially-parallel groove of the first hub (27) or cooperates with a projection.

## Revendications

1. Système d'entraînement d'actionnement (1), notamment pour actionner une soupape de recyclage de gaz d'échappement, comprenant un moteur électrique (2), un réducteur (3), un dispositif de sécurité intégrée (4) et un élément de transmission de sortie (7), le moteur électrique (2), le réducteur (3), le dispositif de sécurité intégrée (4) et l'élément de transmission de sortie (7) étant agencés de manière successive sur un axe de symétrie commun, et le réducteur et le dispositif de sécurité intégrée (4) étant logés dans un carter de transmission commun (6), le réducteur étant un train épicycloïdal (3), qui comprend une roue centrale (13), plusieurs pignons satellites (22) montés sur un porte-satellites (14), et une couronne à denture intérieure (10),
**caractérisé en ce que** le moteur électrique (2) est un moteur électrique à collecteur comprenant une couronne porte-balais (9), qui reçoit un palier à roulement (8) et sert de flasque de palier pour le moteur électrique (2), le palier à roulement (8) faisant saillie axialement hors de la couronne porte-balais (9), et la bague extérieure du palier à roulement (8), qui fait saillie, servant d'embout de réception pour la couronne à denture intérieure (10) du train épicycloïdal (3), ou bien le porte-balais (9) est d'un seul tenant avec la couronne à denture intérieure (10).

2. Système d'entraînement d'actionnement selon la revendication 1, **caractérisé en ce que** l'élément de transmission de sortie (7) est agencé à l'extérieur du carter de transmission (6).

3. Système d'entraînement d'actionnement selon la revendication 1, **caractérisé en ce que** l'élément de transmission de sortie (7) est agencé à l'intérieur du carter de transmission (6).

4. Système d'entraînement d'actionnement selon la revendication 2 ou la revendication 3, **caractérisé en ce que** l'élément de transmission de sortie (7) est un pignon de crémaillère d'une transmission à crémaillère (5).

5. Système d'entraînement d'actionnement selon la revendication 1, **caractérisé en ce qu'**il comprend un arbre de moteur (11) et un arbre de transmission (12), qui peuvent tourner relativement l'un par rapport à l'autre sur le plan de la transmission, et l'arbre de transmission (12) est monté en rotation directement dans l'arbre de moteur ou bien dans une roue centrale (13) du train épicycloïdal (3), qui est liée à l'arbre de moteur.

6. Système d'entraînement d'actionnement selon la revendication 1, **caractérisé en ce que** la couronne à denture intérieure (10) est liée de manière fixe en rotation avec le carter de transmission (6).

7. Système d'entraînement d'actionnement selon la revendication 1, **caractérisé en ce que** la couronne à denture intérieure (10) est d'un seul tenant avec le carter de transmission (6).

8. Système d'entraînement d'actionnement selon l'une au moins des revendications précédentes, **caractérisé en ce que** le porte-satellites (14) du train épicycloïdal (3) porte un tenon entraîneur (15), qui est en prise avec le dispositif de sécurité intégrée (4).

9. Système d'entraînement d'actionnement selon la revendication 8, **caractérisé en ce que** le tenon entraîneur (15) est un tenon cylindrique, qui est monté à force dans un bras (21) d'un seul tenant avec le porte-satellites (14), ou bien est d'un seul tenant avec le porte-satellites.

10. Système d'entraînement d'actionnement selon la revendication 5, **caractérisé en ce que** le porte-satellites (14) est relié de manière fixe à l'arbre de transmission (12) ou est d'un seul tenant avec celui-ci.

11. Système d'entraînement d'actionnement selon la revendication 1 ou la revendication 8, **caractérisé en ce que** le dispositif de sécurité intégrée (4) comprend un ressort spiral (16), qui, d'un côté peut être entraîné par un premier moyen entraîneur (17), et de l'autre côté par un deuxième moyen entraîneur (18), et peut ainsi être mis en tension.

12. Système d'entraînement d'actionnement selon la revendication 11, **caractérisé en ce que** le premier moyen entraîneur (17) présente un premier moyeu (27) et le deuxième moyen entraîneur (18) un deuxième moyeu (50), et **en ce que** les moyeux (27, 50) présentent chacun un passage pour l'arbre de transmission (12) sur lequel sont montés, mobiles en rotation, les deux moyens entraîneurs (17, 18).

13. Système d'entraînement d'actionnement selon la revendication 11 ou la revendication 12, **caractérisé en ce que** le premier moyen entraîneur (17) présente une première zone en forme de disque (25), qui se raccorde au premier moyeu (27), et le deuxième moyen entraîneur (18) présente une deuxième zone en forme de disque, qui se raccorde au deuxième moyeu (50), les zones en forme de disque (25, 51) et les moyeux (27, 50) délimitant un compartiment de logement pour le ressort spiral (16).

14. Système d'entraînement d'actionnement selon la revendication 11, 12 ou la revendication 13, **caractérisé en ce que** le premier moyen entraîneur (17) présente une protubérance de butée (24) qui interagit avec une butée de carter (49) dans le carter de transmission (6).

15. Système d'entraînement d'actionnement selon les revendications 8 et 14, **caractérisé en ce que** le tenon entraîneur (15) est agencé mobile en rotation dans un espace de déplacement, qui est délimité radialement par la première zone en forme de disque (25) du premier moyen entraîneur (17) et le carter de transmission (6), et la zone angulaire de rotation de l'espace de déplacement est limitée par deux protubérances de butée (24) du premier moyen entraîneur (17).

16. Système d'entraînement d'actionnement selon l'une au moins des revendications 11 à 15, **caractérisé en ce que** le deuxième moyen entraîneur (18) présente un bossage entraîneur (19), qui interagit avec le tenon entraîneur (15) du porte-satellites (14), et un tourillon entraîneur (20), qui sert à venir en prise dans l'extrémité extérieure (26), cintrée en demi-cercle, du ressort spiral (16).

17. Système d'entraînement d'actionnement selon la revendication 16, **caractérisé en ce que** le bossage entraîneur (19) est agencé sur le moyen de transmission (18) en forme de disque, dans la zone de bordure radialement extérieure de celui-ci et de manière sensiblement décalée de 180° par rapport au tourillon entraîneur (20).

18. Système d'entraînement d'actionnement selon la revendication 12, **caractérisé en ce que** le ressort spiral (16) est agencé autour du premier moyeu (27) du premier moyen entraîneur (17), et la première extrémité du ressort spiral (16) est coudée et orientée radialement vers l'axe de rotation, et s'engage dans une rainure parallèle à l'axe du premier moyeu (27) ou interagit avec une protubérance.
